# EUROPEAN PATENT SPECIFICATION

(11) **EP 2 649 353 B1**
(45) Date of publication and mention of the grant of the patent: **08.07.2015**
(21) Application number: 11808281.7
(22) Date of filing: 07.12.2011
(51) Int. Cl.: F16K 17/04, F16K 29/00

(54) **RELIEF VALVE**
ABLASSVENTIL
SOUPAPE DE DÉCHARGE

(30) Priority: 07.12.2010 GB 201020697
(43) Date of publication of application: 16.10.2013
(73) Proprietor: Norgren Limited, Lichfield Staffordshire WS13 6SB (GB)
(72) Inventor: TARCZEWSKI, Jacek, Lichfield Staffordshire WS13 7DD (GB); EDWARDS, Richard, Lichfield Staffordshire WS14 0GH (GB); SAHOTA, Jagroop, Coventry Warwickshire CV7 9GJ (GB)
(74) Representative: Hartwell, Ian Peter
(86) International application number: PCT/GB2011/052415
(87) International publication number: WO 2012/076878

(56) References cited:
- DE-A1- 3 916 260
- JP-A- 2003 028 330
- US-A- 4 862 913
- US-A1- 2004 134 539

## Description

### BACKGROUND OF THE INVENTION

### 1. FIELD OF THE INVENTION

The invention is related to the field of valves, and more particularly, to a relief valve.

### 2. DESCRIPTION OF THE PRIOR ART

Relief valves are used to prevent a build-up of excessive pressure in a fluid system. A relief valve can prevent an overpressure situation that could damage components of the fluid system. A relief valve can prevent an overpressure situation that could cause leakage and/or failure of components. A relief valve can prevent an overpressure situation that could present safety issues. A relief valve can prevent undesired pressure fluctuations.

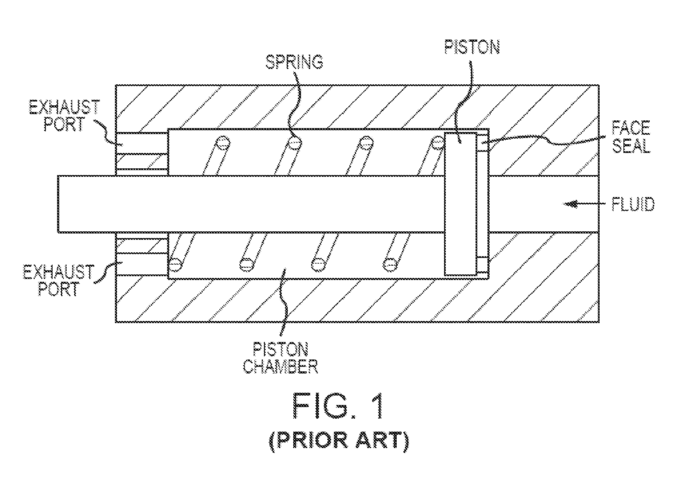

FIG. 1 shows a prior art relief valve. Prior art relief valves typically use a spring and piston to counter a fluid force. The spring is selected to be compressed and therefore to allow the piston move to an open position when the pressure exceeds a threshold. The prior art relief valve includes a face seal on the face of the piston. The face seal contacts (and seals) against an end of the piston chamber. For example, US4862913 discloses a relief valve having a face seal. The strength of the seal therefore depends on the force applied to the piston by the spring, wherein the prior art piston compresses the face seal against the interior of the piston chamber. The face seal may sealingly contact the end of the piston chamber radially outward from the input port, as shown, or may directly block the input port. The input pressure will move the piston and compress the spring when the fluid pressure exceeds a threshold.

The prior art relief valve has drawbacks. The prior art relief valve is designed to have a single, specific position when closed. The prior art relief valve desirably should not move from a fully closed position until a threshold pressure has been exceeded, but this is practically impossible. The fluid pressure counters the closing/sealing force provided by the spring. Therefore, as soon as significant pressure is applied to the prior art relief valve, the piston will move and weaken the sealing force provided by the spring.

The prior art relief valve may stick. This is due to stiction, the force needed to overcome static cohesion between two objects pressing against each other. Stiction therefore increases the force that is needed in order to cause the two contacting objects to slide.

This tendency to have undesirably large levels of stiction in the prior art pressure relief valve results in the need for opening forces that are higher than just the pressure threshold. Stiction in the prior art relief valve therefore may result in a delayed opening, may result in erratic opening forces and erratic opening times, and may result in inaccurate and variable resulting pressure levels.

Further, because the prior art piston may not move for long periods of time, the prior art face seal may at least partially bond to the piston chamber. This tendency to have undesirably large levels of stiction in the prior art pressure relief valve may damage the prior art face seal.

### ASPECTS OF THE INVENTION

In some aspects of the invention, a relief valve comprises:
a floating piston configured to move reciprocally in a piston chamber in response to fluid pressure, with the piston chamber including a fluid inlet;
a circumferential seal located on the floating piston and configured to substantially seal the floating piston to the piston chamber;
a biasing device configured to keep the floating piston within a piston float movement range, wherein the fluid is held when the floating piston is within the piston float movement range and the fluid is exhausted when the floating piston exceeds the piston float movement range; and
one or more relief grooves formed in a sidewall of the piston chamber, with the one or more relief grooves being configured to conduct fluid around the floating piston and the circumferential seal when the floating piston is compressed beyond the piston float movement range in the piston chamber.

Preferably, the floating piston includes a circumferential groove that receives and retains the circumferential seal.

Preferably, the one or more relief grooves comprises two or more relief grooves spaced around the sidewall.

Preferably, the one or more relief grooves are substantially constant in cross-sectional area along a groove length.

Preferably, the one or more relief grooves vary in cross-sectional area along a groove length.

Preferably, the circumferential seal maintains a substantially constant seal contact with the piston chamber at any point in an actuation span of the floating piston.

Preferably, a sealing force between the circumferential seal and the piston chamber is substantially constant even where the fluid pressure varies.

Preferably, the one or more relief grooves extend from a predetermined release threshold over at least a portion of a piston release movement range.

Preferably, the one or more relief grooves extend from a predetermined release threshold over at least a portion of a piston release movement range, wherein the predetermined release threshold substantially corresponds to an end of the piston float movement range.

In some aspects of the invention, a method of making a relief valve comprises:
providing a floating piston configured to move reciprocally in a piston chamber in response to fluid pressure, with the piston chamber including a fluid inlet;
providing a circumferential seal located on the floating piston and configured to substantially seal the floating piston to the piston chamber;
providing a biasing device configured to keep the floating piston within a piston float movement range, wherein the fluid is held when the floating piston is within the piston float movement range and the fluid is exhausted when the floating piston exceeds the piston float movement range; and
providing one or more relief grooves formed in a sidewall of the piston chamber, with the one or more relief grooves being configured to conduct fluid around the floating piston and the circumferential seal when the floating piston is compressed past the piston float movement range in the piston chamber.

Preferably, the floating piston includes a circumferential groove that receives and retains the circumferential seal.

Preferably, the one or more relief grooves comprises two or more relief grooves spaced around the sidewall.

Preferably, the one or more relief grooves are substantially constant in cross-sectional area along a groove length.

Preferably, the one or more relief grooves vary in cross-sectional area along a groove length.

Preferably, the circumferential seal maintains a substantially constant seal contact with the piston chamber at any point in an actuation span of the floating piston.

Preferably, a sealing force between the circumferential seal and the piston chamber is substantially constant even where the fluid pressure varies.

Preferably, the one or more relief grooves extend from a predetermined release threshold over at least a portion of a piston release movement range.

Preferably, the one or more relief grooves extend from a predetermined release threshold over at least a portion of a piston release movement range, wherein the predetermined release threshold substantially corresponds to an end of the piston float movement range.

### BRIEF DESCRIPTION OF THE DRAWINGS

The same reference number represents the same element on all drawings. It should be understood that the drawings are not necessarily to scale.
FIG. 1 shows a prior art relief valve.
FIG. 2 shows a relief valve according to the invention.
FIG. 3 shows detail of one or more relief grooves inside the relief valve according to the invention.
FIG. 4 shows the relief valve when in a relief state.
FIG. 5 shows the relief valve according to another embodiment of the invention.
FIG. 6 shows the relief valve according to another embodiment of the invention.
FIG. 7 shows the relief valve according to another embodiment of the invention.

### DETAILED DESCRIPTION OF THE INVENTION

FIGS. 1-7 and the following description depict specific examples to teach those skilled in the art how to make and use the best mode of the invention. For the purpose of teaching inventive principles, some conventional aspects have been simplified or omitted. Those skilled in the art will appreciate variations from these examples that fall within the scope of the invention. Those skilled in the art will appreciate that the features described below can be combined in various ways to form multiple variations of the invention. As a result, the invention is not limited to the specific examples described below, but only by the claims and their equivalents.

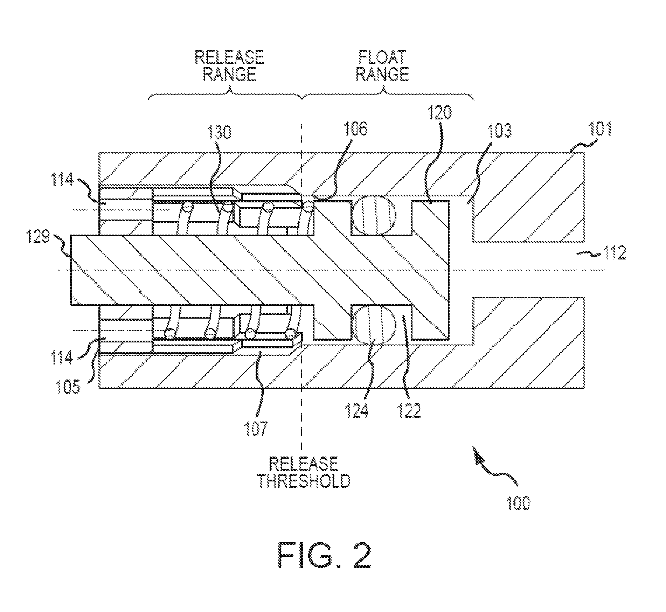

FIG. 2 shows a relief valve 100 according to the invention. The relief valve 100 includes a valve body 101 including a piston chamber 103 formed therein, and a fluid inlet 112 that is in fluidic communication with the piston chamber 103. The piston chamber 103 is substantially elongate. A floating piston 120 is configured to move reciprocally in the piston chamber 103 in response to fluid pressure. Pressurized fluid can be introduced into the piston chamber 103 through the fluid inlet 112. The valve body 101 includes one or more exhaust ports 114 that exhaust any fluid that has passed by the floating piston 120. The one or more exhaust ports 114 are on an opposing side of the floating piston 120 from the fluid inlet 112. The one or more exhaust ports 114 may be of any cross-sectional area with respect to the cross-sectional area of the fluid inlet 112. Further, the one or more exhaust ports 114 may comprise multiple passages, as shown.

During normal operation with normal fluid pressures, the floating piston 120 may move within the piston float movement range. When the fluid pressure exceeds a predetermined pressure threshold, however, then the excessive pressure will move the floating piston 120 past a predetermined release threshold and into a piston release movement range. The predetermined release threshold substantially corresponds to a predetermined release pressure of the fluid. The predetermined release threshold substantially corresponds to an end of the piston float movement range and a beginning of the piston release movement range. Consequently, the relief valve 100 operates by compressing the floating piston 120, wherein fluid is exhausted from the relief valve 100 when the floating piston 120 is compressed to (or past) the predetermined release threshold. When the fluid pressure provided by the fluid inlet 112 exceeds this predetermined release pressure, the floating piston 120 reaches or passes the predetermined release threshold and fluid is vented around the floating piston 120 and out of the relief valve 100.

In some embodiments, the piston chamber 103 and the floating piston 120 are substantially cylindrical in shape. However, other cross-sectional shapes are contemplated and are within the scope of the description and claims.

The piston chamber 103 includes a sidewall 106. One or more relief grooves 107 are formed in the sidewall 106. The one or more relief grooves 107 are configured to conduct fluid around the floating piston 120 and the circumferential seal 124 when the floating piston 120 is compressed to a predetermined relief location in the piston chamber 103. The one or more relief grooves 107 extend only partially along the sidewall 106 and are configured to conduct fluid around the floating piston 120 when the floating piston 120 is compressed to a predetermined relief location in the piston chamber 103 (*i.e.,* moved due to pressure greater than a predetermined relief threshold).

The one or more relief grooves 107 are of a length and position to conduct fluid around the floating piston 120 and the circumferential seal 124 when the floating piston 120 reaches and/or passes a predetermined point in the piston chamber 103. This point coincides with a beginning of a groove (or grooves) of the one or more relief grooves 107 and comprises the predetermined release threshold. The one or more relief grooves 107 may extend partially or fully from this opening point to the end of the piston chamber 103, which is the left end in the figure. The one or more relief grooves 107 comprise two or more relief grooves 107 spaced around the sidewall 106 of the piston chamber 103. In some embodiments, the two or more relief grooves 107 may be equidistantly spaced around the sidewall 106.

It should be understood that the one or more relief grooves 107 do not have to extend from the threshold point to the end of the piston chamber 103. Instead, the one or more relief grooves 107 only have to extend far enough to relieve excess pressure on the inlet side of the floating piston 120. For example, the one or more relief grooves 107 may extend only a predetermined distance from the threshold point, allowing the floating piston 120 to move and relive pressure, but not constructed to necessarily enable the floating piston 120 to be completely compressed within the piston chamber 103.

The one or more relief grooves 107 may feature any desired cross-sectional shape and any desired cross-sectional area. The groove cross-sectional area may be chosen according to the expected fluid and according to the expected fluid pressure, wherein the cross sectional groove area will control how rapidly excess fluid pressure is relieved. The one or more relief grooves 107 are substantially constant in cross-sectional area along a groove length in some embodiments. The one or more relief grooves 107 vary in cross-sectional area along a groove length in some embodiments.

The one or more relief grooves 107 are substantially aligned with the axis of the piston chamber 103 in the embodiment shown. However, it should be understood that the one or more relief grooves 107 can be curved or helical, angled or arranged in regular or irregular fashion.

The floating piston 120 includes a circumferential groove 122 that receives and retains a circumferential seal 124. The circumferential seal 124 is located circumferentially on the floating piston 120 and is configured to substantially seal the floating piston 120 to the piston chamber 103, including during reciprocating motion of the floating piston 120. The circumferential seal 124 will seal the floating piston 120 with respect to the piston chamber 103 at any point, except for sealing the one or more relief grooves 107.

In some embodiments, circumferential groove 122 is larger than the circumferential seal 124 and the circumferential seal 124 can move in the circumferential groove 122. Alternatively, the circumferential groove 122 is sized to not let the circumferential seal 124 move with respect to the floating piston 120.

The relief valve 100 includes a biasing device 130 that provides a closing force. The closing force of the biasing device 130 operates to keep the relief valve 100 closed. The biasing device 130 provides a predetermined closing force. The predetermined closing force is equal to the predetermined release pressure of the relief valve 100. The predetermined closing force allows the floating piston 120 to compress and move past a beginning point of the one or more relief grooves 107 when a predetermined release threshold has been achieved or exceeded.

The biasing device 130 is configured to keep the floating piston 120 within a piston float movement range. Fluid is held when the floating piston 120 is within the piston float movement range and the fluid is exhausted when the floating piston 120 exceeds the piston float movement range.

In some embodiments, the biasing device 130 may be adjustable. As a consequence, the biasing device 130 may be used to change the predetermined release threshold.

The biasing device 130 does not affect a seal contact between the circumferential seal 124 and the piston chamber 103. The circumferential seal 124 maintains a substantially constant seal contact with the piston chamber 103 at any point in an actuation span of the floating piston 120. A sealing force between the circumferential seal 124 and the piston chamber 103 is substantially constant even where the fluid pressure varies.

The relief valve 100 includes an end portion 105. The end portion 105 may be assembled to the valve body 101 after the piston 100 and the biasing device 130 have been inserted into the piston chamber 103. The end portion 105 may be assembled to the valve body 101 in any manner. The end portion 105 may be removably affixed to the valve body 101. Alternatively, the end portion 105 may be permanently affixed to the valve body 101. The end portion 105 may include the one or more exhaust ports 114 or may include partial apertures that form the one or more exhaust ports 114 when the end portion 105 is assembled into the valve body 101.

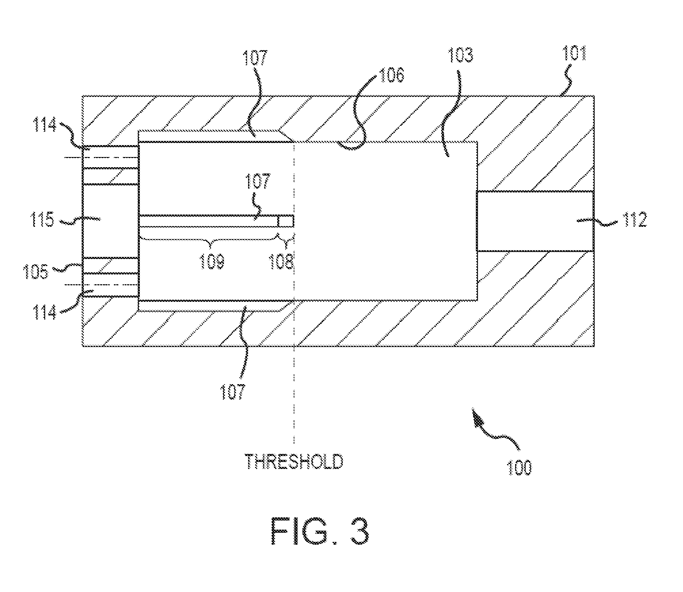

The floating piston 120 further includes a piston shaft 129. In some embodiments, the piston shaft 129 extends out of the relief valve 100, such as through a shaft orifice 115 (see FIG. 3). The piston shaft 129 may stabilize the floating piston 120 and prevent the floating piston 120 from moving in any way except in a linear, reciprocating manner in the piston chamber 103. In addition, the piston shaft 129 may provide a visual indicator of the position of the floating piston 120, and may include any manner of shape or visual indicia that provides a visual indication when the relief valve 100 is actuated. For example, the piston shaft 129 may include a colored, textured, or other visibly differentiated region that may only be visible when the floating piston 120 is compressed past the predetermined release threshold. In this manner, the differentiated region may only be visible when the relief valve 100 is exhausting fluid and relieving excess fluid pressure.

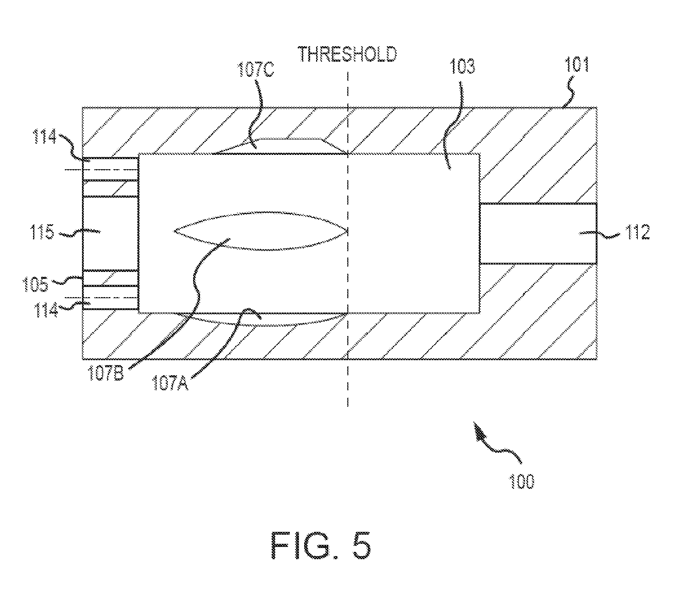

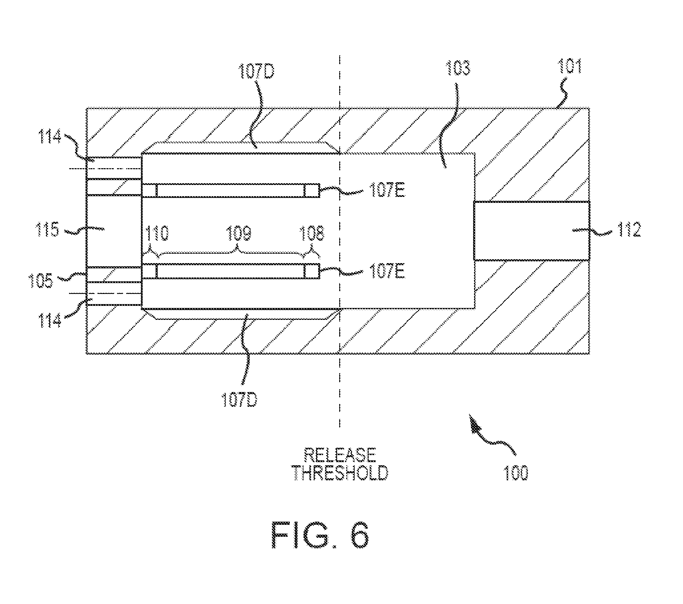

FIG. 3 shows detail of the one or more relief grooves 107 inside the relief valve 100 according to the invention. The one or more relief grooves 107 in this embodiment comprise a lead-in portion 108 and a channel portion 109. The lead-in portion 108 comprises a varying cross-sectional area that expands from nothing to the cross-sectional area of the channel portion 109. The channel portion 109 may have a regular cross-sectional area along the length of the groove or may increase or decrease in cross-sectional area (see FIG. 5 and the accompanying discussion, for example). In some embodiments, the one or more relief grooves 107 may not have a lead-in portion 108. In some embodiments, the one or more relief grooves 107 may include a lead-out portion 110 (see FIG. 6).

As can be seen from the figure, the one or more relief grooves 107 can be substantially regularly spaced around on the sidewall 106. The one or more relief grooves 107 alternatively can be started in staggered or alternating fashion or in other arrangements (see FIG. 6, for example).

The one or more relief grooves 107 can extend from a predetermined release threshold (see dashed line) to an end of the piston chamber 103 in some embodiments. In the embodiment shown, the floating piston 120 will always be in fluidic communication with the one or more relief grooves 107 where the floating piston 120 is compressed past the predetermined release threshold. Alternatively, the one or more relief grooves 107 may not extend over a full range of the piston compression span (see grooves 107A-107C of FIG. 5).

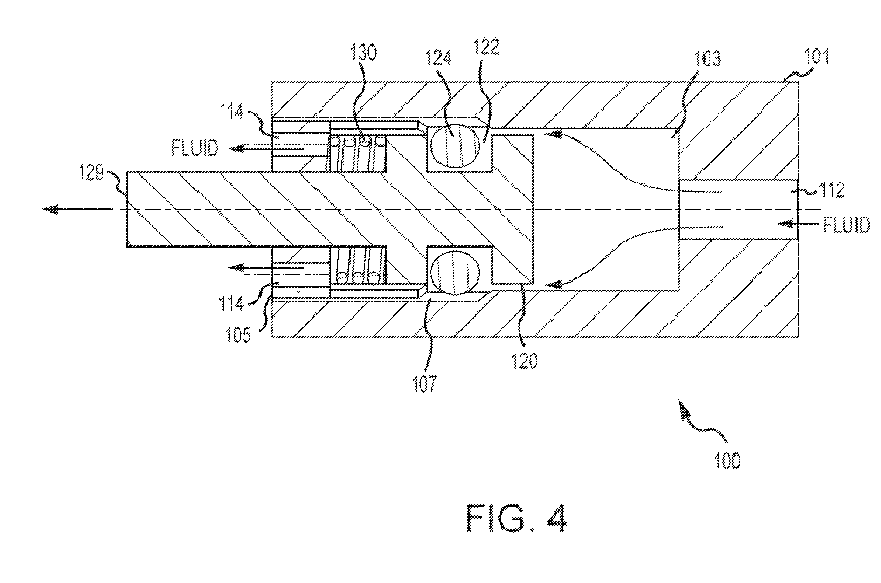

FIG. 4 shows the relief valve 100 when in a relief state. The fluid pressure, acting against the biasing device 130, has compressed the floating piston 120 and moved the floating piston 120 to the left in the figure. The floating piston 120 has been at least partially compressed by the fluid pressure provided by the fluid inlet 112 and the floating piston 120 has passed the predetermined release threshold as a result. Consequently, the circumferential seal 124 is positioned over the one or more relief grooves 107, wherein fluid is allowed to escape through the one or more relief grooves 107 and via the one or more exhaust ports 114.

The floating piston 120 will stay at the compressed, venting position until the fluid pressure drops. As the fluid pressure decreases, the floating piston 120 will move to the right in response. When the fluid release causes the fluid pressure to drop below the predetermined release threshold, the floating piston 120 will move back to a blocking position, wherein fluid cannot reach the one or more relief grooves 107. No further fluid will be exhausted until fluid pressure again exceeds the predetermined release threshold.

FIG. 5 shows the relief valve 100 according to another embodiment of the invention. In this embodiment, a cross-sectional area of a relief groove 107 may increase with increased piston compression travel, allowing a greater rate of fluid venting with greater piston compression. As can be seen from the figure, relief groove 107A features an increasing depth as it extends from the threshold point. The increasing depth can comprise a linear or non-linear increase in depth. The relief groove 107A may further include a decreasing depth after a predetermined compression point, wherein the relief groove 107A does not need to provide a fluid exhaust volume (or an increasing fluid exhaust volume) at an extreme of the compression range. Alternatively, the relief groove 107A may not decrease and may instead remain substantially constant after the predetermined compression point.

In contrast, relief groove 107B features an increasing width as it extends from the threshold point. The relief groove 107B may further include a decreasing width after a predetermined compression point, wherein the relief groove 107B does not need to provide a fluid exhaust volume (or an increasing fluid exhaust volume) at an extreme of the compression range. Alternatively, the relief groove 107B may not decrease and may instead remain substantially constant after the predetermined compression point.

The relief groove 107C features substantially linear lead-in and lead out portions. The relief groove 107C may include substantially vertical or angled sidewalls. It should be understood that any of the groove embodiments herein may provide an increasing and/or decreasing cross-sectional area as the floating piston 120 is compressed further by the pressure provided at the fluid inlet 112.

FIG. 6 shows the relief valve 100 according to another embodiment of the invention. In this embodiment, the relief valve 100 includes a first set of relief grooves 107D that begin at the predetermined release threshold. This embodiment further includes a second set of relief grooves 107E. The second set of relief grooves 107E are offset a predetermined distance from the first set of relief grooves 107D and the predetermined release threshold. As a consequence, the first set of relief grooves 107D and the second set of relief grooves 107E may generate a two-stage pressure release, for example, with the second set of relief grooves 107E only venting when the fluid pressure is excessive (or where the fluid pressure rises abruptly).

Like the first set of relief grooves 107D, the second set of relief grooves 107E can extend all of the way to the end of the piston chamber 103, as shown. Alternatively, the second set of relief grooves 107E can extend only part way to the end.

Like the first set of relief grooves 107D, the second set of relief grooves 107E can include a lead-in portion 108 and a channel portion 109. The lead-in portion 108 is optional and may or may not be included. Further, a relief groove 107E (and any other groove embodiment) can further include an optional lead-out portion 110.

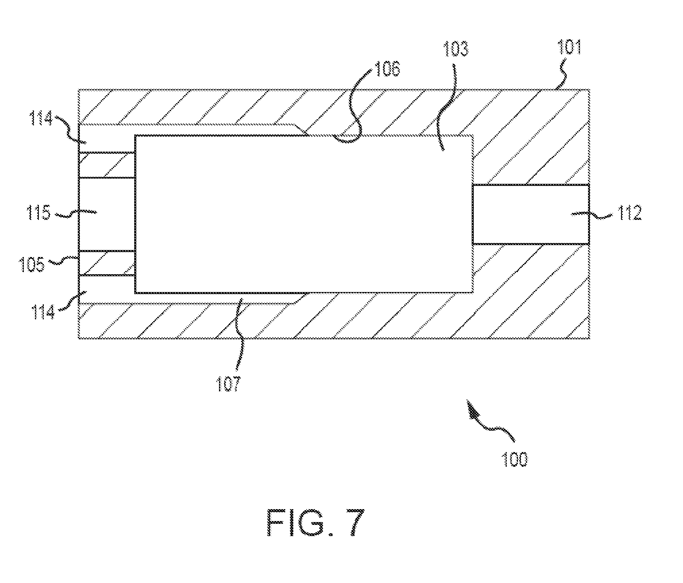

FIG. 7 shows the relief valve 100 according to another embodiment of the invention. In this embodiment, the relief groove or grooves 107 may be formed by boring through the end portion 105, wherein the boring operation continues partially into the piston chamber 103, forming the relief grooves 107. The relief grooves may be of any shape, such as a semi-circular shape as formed by a rotating boring tool.

The various embodiments of the invention can be implemented to provide several advantages, if desired. The relief valve according to any of the embodiments features a reduced stiction. The relief valve therefore is much less likely to stick and open erratically and unpredictably. The relief valve is much less likely to have a delayed or erratic opening. The relief valve according to any of the embodiments opens accurately and reliably at a desired pressure.

The relief valve according to any of the embodiments does not have the high risk of potential bonding of a face seal to the interior of the piston chamber.

The relief valve according to any of the embodiments features a floating piston that does not have a specific closed location. The piston floats with changes in input fluid pressure and seals at various piston locations.

The relief valve according to any of the embodiments does not suffer from a reduced sealing contact and/or sealing force with increasing fluid pressure. The piston is not fixed in place. Therefore, the floating piston exhibits less sticking. Movement of the floating piston does not weaken the seal contact or seal face. Therefore, the relief valve will not have regions or instances of premature sealing loss.

## Claims

1. A relief valve (100), comprising:
a floating piston (120) configured to move reciprocally in a piston chamber (103) in response to fluid pressure, with the piston chamber (103) including a fluid inlet (112);
a circumferential seal (124) located on the floating piston (120) and configured to substantially seal the floating piston (120) to the piston chamber (103);
a biasing device (130) configured to keep the floating piston (120) within a piston float movement range, wherein the fluid is held when the floating piston (120) is within the piston float movement range and the fluid is exhausted when the floating piston (120) exceeds the piston float movement range; **characterised in that** the valve further comprises
one or more relief grooves (107) formed in a sidewall (106) of the piston chamber (103), with the one or more relief grooves (107) being configured to conduct fluid around the floating piston (120) and the circumferential seal (124) when the floating piston (120) is compressed beyond the piston float movement range in the piston chamber (103).

2. The relief valve (100) of claim 1, with the floating piston (120) including a circumferential groove (122) that receives and retains the circumferential seal (124).

3. The relief valve (100) of claim 1, wherein the one or more relief grooves (107) are substantially constant in cross-sectional area along a groove length.

4. The relief valve (100) of claim 1, wherein the one or more relief grooves (107) vary in cross-sectional area along a groove length.

5. The relief valve (100) of claim 1, wherein a sealing force between the circumferential seal (124) and the piston chamber (103) is substantially constant even where the fluid pressure varies and wherein the circumferential seal (124) maintains a substantially constant seal contact with the piston chamber (103) at any point in an actuation span of the floating piston (120).

6. The relief valve (100) of claim 1, wherein the one or more relief grooves extend from a predetermined release threshold over at least a portion of a piston release movement range.

7. The relief valve (100) of claim 1, wherein the one or more relief grooves extend from a predetermined release threshold over at least a portion of a piston release movement range, wherein the predetermined release threshold substantially corresponds to an end of the piston float movement range.

8. A method of making a relief valve, comprising:
providing a floating piston configured to move reciprocally in a piston chamber in response to fluid pressure, with the piston chamber including a fluid inlet;
providing a circumferential seal located on the floating piston and configured to substantially seal the floating piston to the piston chamber;
providing a biasing device configured to keep the floating piston within a piston float movement range, wherein the fluid is held when the floating piston is within the piston float movement range and the fluid is exhausted when the floating piston exceeds the piston float movement range;
**characterised in that** the method further comprises the step of
providing one or more relief grooves formed in a sidewall of the piston chamber, with the one or more relief grooves being configured to conduct fluid around the floating piston and the circumferential seal when the floating piston is compressed past the piston float movement range in the piston chamber.

9. The method of claim 8, with the floating piston including a circumferential groove that receives and retains the circumferential seal.

10. The method of claim 8, wherein the one or more relief grooves are substantially constant in cross-sectional area along a groove length.

11. The method of claim 8, wherein the one or more relief grooves vary in cross-sectional area along a groove length.

12. The method of claim 8, wherein a sealing force between the circumferential seal and the piston chamber is substantially constant even where the fluid pressure varies and wherein the circumferential seal maintains a substantially constant seal contact with the piston chamber at any point in an actuation span of the floating piston.

13. The method of claim 8, wherein the one or more relief grooves extend from a predetermined release threshold over at least a portion of a piston release movement range.

14. The method of claim 8, wherein the one or more relief grooves extend from a predetermined release threshold over at least a portion of a piston release movement range, wherein the predetermined release threshold substantially corresponds to an end of the piston float movement range.

## Patentansprüche

1. Ablassventil (100), das Folgendes umfasst:
einen schwimmenden Kolben (120), der dafür konfiguriert ist, sich in einer Kolbenkammer (103) als Reaktion auf Fluiddruck hin und her zu bewegen, wobei die Kolbenkammer (103) einen Fluideinlass (112) umfasst;
eine Umfangsdichtung (124), die auf dem schwimmenden Kolben (120) angeordnet ist und dafür konfiguriert ist, den schwimmenden Kolben (120) an der Kolbenkammer (103) im Wesentlichen abzudichten;
eine Vorspannvorrichtung (130), die dafür konfiguriert ist, den schwimmenden Kolben (120) innerhalb eines Kolbenschwimmbewegungsbereichs zu halten, wobei das Fluid gehalten wird, wenn sich der schwimmende Kolben (120) innerhalb des Kolbenschwimmbewegungsbereichs befindet, und das Fluid abgelassen wird, wenn der schwimmende Kolben (120) den Kolbenschwimmbewegungsbereich überschreitet;
**dadurch gekennzeichnet, dass** das Ventil ferner Folgendes umfasst:
eine oder mehrere Ablassnuten (107), die in einer Seitenwand (106) der Kolbenkammer (103) gebildet sind, wobei die eine oder die mehreren Ablassnuten (107) dafür konfiguriert sind, Fluid um den schwimmenden Kolben (120) und die Umfangsdichtung (124) zu leiten, wenn der schwimmende Kolben (120) über den Kolbenschwimmbewegungsbereich in der Kolbenkammer (103) hinaus komprimiert wird.

2. Ablassventil (100) nach Anspruch 1, wobei der schwimmende Kolben (120) eine Umfangsnut (122) umfasst, die die Umfangsdichtung (124) aufnimmt und hält.

3. Ablassventil (100) nach Anspruch 1, wobei die eine oder die mehreren Ablassnuten (107) im Querschnittsbereich entlang einer Nutlänge im Wesentlichen konstant sind.

4. Ablassventil (100) nach Anspruch 1, wobei die eine oder die mehreren Ablassnuten (107) im Querschnittsbereich entlang einer Nutlänge variieren.

5. Ablassventil (100) nach Anspruch 1, wobei eine Dichtkraft zwischen der Umfangsdichtung (124) und der Kolbenkammer (103) im Wesentlichen konstant ist, sogar wenn der Fluiddruck variiert, und wobei die Umfangsdichtung (124) mit der Kolbenkammer (103) einen im Wesentlichen konstanten Dichtkontakt an einer beliebigen Stelle einer Betätigungsspanne des schwimmenden Kolbens (120) aufrechterhält.

6. Ablassventil (100) nach Anspruch 1, wobei sich die eine oder die mehrere Ablassnuten von einer vorbestimmten Freigabeschwelle über mindestens einen Abschnitt eines Kolbenfreigabebewegungsbereichs erstrecken.

7. Ablassventil (100) nach Anspruch 1, wobei sich die eine oder die mehrere Ablassnuten von einer vorbestimmten Freigabeschwelle über mindestens einen Abschnitt eines Kolbenfreigabebewegungsbereichs erstrecken, wobei die vorbestimmte Freigabeschwelle im Wesentlichen einem Ende des Kolbenschwimmbewegungsbereichs entspricht.

8. Verfahren zur Herstellung eines Ablassventils, wobei das Verfahren Folgendes umfasst:
Bereitstellen eines schwimmenden Kolbens, der dafür konfiguriert ist, sich in einer Kolbenkammer als Reaktion auf Fluiddruck hin und her zu bewegen, wobei die Kolbenkammer einen Fluideinlass umfasst;
Bereitstellen einer Umfangsdichtung, die an dem schwimmenden Kolben angeordnet und dafür konfiguriert ist, den schwimmenden Kolben im Wesentlichen an der Kolbenkammer abzudichten;
Bereitstellen einer Vorspannvorrichtung, die dafür konfiguriert ist, den schwimmenden Kolben innerhalb eines Kolbenschwimmbewegungsbereichs zu halten, wobei das Fluid gehalten wird, wenn sich der schwimmende Kolben innerhalb des Kolbenschwimmbewegungsbereichs befindet, und das Fluid abgelassen wird, wenn der schwimmende Kolben den Kolbenschwimmbewegungsbereich überschreitet;
**dadurch gekennzeichnet, dass** das Verfahren den Schritt des
Bereitstellens einer oder mehrerer Ablassnuten umfasst, die in einer Seitenwand der Kolbenkammer gebildet sind, wobei die eine oder die mehreren Ablassnuten dafür konfiguriert sind, Fluid um den schwimmenden Kolben und die Umfangsdichtung zu leiten, wenn der schwimmende Kolben über den Kolbenschwimmbewegungsbereich in der Kolbenkammer hinaus komprimiert wird.

9. Verfahren nach Anspruch 8, wobei der schwimmende Kolben eine Umfangsnut umfasst, die die Umfangsdichtung aufnimmt und hält.

10. Verfahren nach Anspruch 8, wobei die eine oder die mehreren Ablassnuten im Querschnittsbereich entlang einer Nutlänge im Wesentlichen konstant sind.

11. Verfahren nach Anspruch 8, wobei die eine oder die mehreren Ablassnuten im Querschnittsbereich entlang einer Nutlänge variieren.

12. Verfahren nach Anspruch 8, wobei eine Dichtkraft zwischen der Umfangsdichtung und der Kolbenkammer im Wesentlichen konstant ist, sogar wenn der Fluiddruck variiert, und wobei die Umfangsdichtung mit der Kolbenkammer einen im Wesentlichen konstanten Dichtkontakt an einer beliebigen Stelle einer Betätigungsspanne des schwimmenden Kolbens aufrechterhält.

13. Verfahren nach Anspruch 8, wobei sich die eine oder die mehrere Ablassnuten von einer vorbestimmten Freigabeschwelle über mindestens einen Abschnitt eines Kolbenfreigabebewegungsbereichs erstrecken.

14. Verfahren nach Anspruch 8, wobei sich die eine oder die mehrere Ablassnuten von einer vorbestimmten Freigabeschwelle über mindestens einen Abschnitt eines Kolbenfreigabebewegungsbereichs erstrecken, wobei die vorbestimmte Freigabeschwelle im Wesentlichen einem Ende des Kolbenschwimmbewegungsbereichs entspricht.

## Revendications

1. Soupape de décharge (100), comprenant :
un piston flottant (120) configuré de façon à effectuer un mouvement de va-et-vient dans une chambre de piston (103) en réaction à une pression de fluide, la chambre de piston (103) incluant un orifice d'admission de fluide (112) ;
un joint circonférentiel (124) positionné sur le piston flottant (120) et configuré de façon à sensiblement assurer l'étanchéité du piston flottant (120) par rapport à la chambre de piston (103) ;
un dispositif de sollicitation (130) configuré de façon à garder le piston flottant (120) dans les limites d'une plage de mouvement de flottement du piston, cas dans lequel le fluide est maintenu lorsque le piston flottant (120) se trouve dans les limites de la plage de mouvement de flottement du piston, et le fluide est évacué lorsque le piston flottant (120) dépasse la plage de mouvement de flottement du piston ;
**caractérisée en ce que** la soupape comporte en outre :
une ou plusieurs rainures à décharge (107) lesquelles sont formées dans une paroi latérale (106) de la chambre de piston (103), ladite une ou plusieurs rainures à décharge (107) étant configurées de façon à diriger du fluide autour du piston flottant (120) et du joint circonférentiel (124) lorsque le piston flottant (120) subit une compression allant au-delà de la plage de mouvement de flottement du piston dans la chambre de piston (103).

2. Soupape de décharge (100) selon la revendication 1, le piston flottant (120) incluant une rainure circonférentielle (122) qui reçoit et retient le joint circonférentiel (124).

3. Soupape de décharge (100) selon la revendication 1, ladite une ou plusieurs rainures à décharge (107) présentant une superficie en coupe transversale sensiblement constante le long d'une longueur de rainure.

4. Soupape de décharge (100) selon la revendication 1, ladite une ou plusieurs rainures à décharge (107) variant en superficie en coupe transversale le long d'une longueur de rainure.

5. Soupape de décharge (100) selon la revendication 1, une force d'étanchéisation entre le joint circonférentiel (124) et la chambre de piston (103) étant sensiblement constante même là où la pression de fluide varie, et le joint circonférentiel (124) maintenant un contact d'étanchéisation sensiblement constant avec la chambre de piston (103) au niveau de n'importe quel point dans une portée d'actionnement du piston flottant (120).

6. Soupape de décharge (100) selon la revendication 1, ladite une ou plusieurs rainures à décharge se prolongeant à partir d'un seuil de libération prédéterminé au-dessus d'au moins une portion d'une plage de mouvement de libération du piston.

7. Soupape de décharge (100) selon la revendication 1, ladite une ou plusieurs rainures à décharge se prolongeant à partir d'un seuil de libération prédéterminé au-dessus d'au moins une portion d'une plage de mouvement de libération du piston, le seuil de libération prédéterminé correspondant sensiblement à une extrémité de la plage de mouvement de flottement du piston.

8. Procédé de fabrication d'une soupape de décharge, comprenant les opérations consistant à :
prévoir un piston flottant configuré de façon à effectuer un mouvement de va-et-vient dans une chambre de piston en réaction à une pression de fluide, la chambre de piston incluant un orifice d'admission de fluide ;
prévoir un joint circonférentiel positionné sur le piston flottant et configuré de façon à sensiblement assurer l'étanchéité du piston flottant par rapport à la chambre de piston ;
prévoir un dispositif de sollicitation configuré de façon à garder le piston flottant dans les limites d'une plage de mouvement de flottement du piston, cas dans lequel le fluide est maintenu lorsque le piston flottant se trouve dans les limites de la plage de mouvement de flottement du piston, et le fluide est évacué lorsque le piston flottant dépasse la plage de mouvement de flottement du piston ;
**caractérisé en ce que** le procédé comprend en outre l'étape consistant à :
prévoir une ou plusieurs rainures à décharge lesquelles sont formées dans une paroi latérale de la chambre de piston, ladite une ou plusieurs rainures à décharge étant configurées de façon à diriger du fluide autour du piston flottant et du joint circonférentiel lorsque le piston flottant subit une compression allant au-delà de la plage de mouvement de flottement du piston dans la chambre de piston.

9. Procédé selon la revendication 8, le piston flottant incluant une rainure circonférentielle qui reçoit et retient le joint circonférentiel.

10. Procédé selon la revendication 8, ladite une ou plusieurs rainures à décharge présentant une superficie en coupe transversale sensiblement constante le long d'une longueur de rainure.

11. Procédé selon la revendication 8, ladite une ou plusieurs rainures à décharge variant en superficie en coupe transversale le long d'une longueur de rainure.

12. Procédé selon la revendication 8, une force d'étanchéisation entre le joint circonférentiel et la chambre de piston étant sensiblement constante même là où la pression de fluide varie, et le joint circonférentiel maintenant un contact d'étanchéisation sensiblement constant avec la chambre de piston au niveau de n'importe quel point dans une portée d'actionnement du piston flottant.

13. Procédé selon la revendication 8, ladite une ou plusieurs rainures à décharge se prolongeant à partir d'un seuil de libération prédéterminé au-dessus d'au moins une portion d'une plage de mouvement de libération du piston.

14. Procédé selon la revendication 8, ladite une ou plusieurs rainures à décharge se prolongeant à partir d'un seuil de libération prédéterminé au-dessus d'au moins une portion d'une plage de mouvement de libération du piston, le seuil de libération prédéterminé correspondant sensiblement à une extrémité de la plage de mouvement de flottement du piston.
